(19)

Europäisches
Patentamt
European
Patent Office
Office européen
des brevets

(11) **EP 4 648 366 A1**

(12) **EUROPEAN PATENT APPLICATION**
published in accordance with Art. 153(4) EPC

(43) Date of publication:
**12.11.2025 Bulletin 2025/46**

(21) Application number: **23916692.9**

(22) Date of filing: **17.01.2023**

(51) International Patent Classification (IPC):
**H04L 27/18** (2006.01)    **H04L 27/34** (2006.01)

(52) Cooperative Patent Classification (CPC):
**H04L 27/18; H04L 27/34**

(86) International application number:
**PCT/CN2023/072663**

(87) International publication number:
**WO 2024/152202 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **YANG, Jingxian
Wuhan, Hubei 430064 (CN)**

• **YANG, Meng
Wuhan, Hubei 430064 (CN)**
• **LIU, Yongjun
Shenzhen, Guangdong 518129 (CN)**
• **XIAO, Long
Wuhan, Hubei 430064 (CN)**
• **HUANG, Qirui
Shenzhen, Guangdong 518129 (CN)**
• **YANG, Liang
Shenzhen, Guangdong 518129 (CN)**

(74) Representative: **Gill Jennings & Every LLP
The Broadgate Tower
20 Primrose Street
London EC2A 2ES (GB)**

(54) **SIGNAL TRANSMITTING METHOD AND TRANSMITTING APPARATUS**

(57)    This application provides a signal transmitting method and a transmitting apparatus. The method is applied to a transmitting apparatus. The transmitting apparatus includes a plurality of transmitting units and a plurality of phase modulation units, the plurality of phase modulation units include a first phase modulation unit, and the plurality of transmitting units include a first transmitting unit. The method includes: Each phase modulation unit modulates a phase of each carrier signal in a set of carrier signals, where the set of carrier signals includes a plurality of carrier signals, frequencies of the plurality of carrier signals are different, the set of carrier signals includes a first carrier signal, and a phase of a modulated first carrier signal is determined based on a frequency of the first carrier signal and a location of the first transmitting unit. Each transmitting unit transmits a set of carrier signals obtained through modulation by one phase modulation unit. According to the solutions provided in this application, a signal-to-noise ratio or efficiency of transmission of the carrier signal during long-range transmission can be improved.

300

S310: Each of a plurality of phase modulation units modulates a phase of each carrier signal in a set of carrier signals, where the set of carrier signals includes a plurality of carrier signals, frequencies of the plurality of carrier signals are different, the set of carrier signals includes a first carrier signal, and a phase of a first carrier signal obtained through modulation by a first phase modulation unit is determined based on a frequency of the first carrier signal and a location of a first transmitting unit

S320: Each of a plurality of transmitting units transmits a set of carrier signals obtained through modulation by one phase modulation unit, where the first transmitting unit transmits a set of carrier signals obtained through modulation by the first phase modulation unit

FIG. 3

EP 4 648 366 A1

# EP 4 648 366 A1

**Description**

## TECHNICAL FIELD

Embodiments of this application relate to the communication field, and more specifically, to a signal transmitting method and a transmitting apparatus.

## BACKGROUND

During propagation of an electromagnetic wave, a transverse wave vector component (a transverse direction is vertical to a transmitting direction) exists. As a result, a beam spreads over a propagation distance, causing diffraction. Diffraction is a physical phenomenon that an electromagnetic wave deviates from an original propagation route when encountering an obstacle.

To overcome diffraction, in a possible implementation, a beamforming technology is used. Beamforming has a high requirement on a phase; and if a phase mismatch occurs, transmission performance deteriorates. In addition, beamforming cannot break through a diffraction limit (minimum divergence that can be achieved in a conventional method), and a minimum divergence angle (full angle) in a transmission process is $\alpha=1.22\lambda/D$, where $\lambda$ is a wavelength, and D is an antenna diameter. It can be learned that for long-range transmission, a signal-to-noise ratio or efficiency of beamforming in a transmission process is low.

In another possible implementation, the electromagnetic wave is converted into a non-diffractive beam (for example, a Bessel beam). The non-diffractive beam has a property of non-divergence, and has a focusing capability beyond the diffraction limit. However, the non-diffractive beam such as the Bessel beam has a short effective distance, for example, the effective distance is within $2D^2/\lambda$. After the effective distance is exceeded, the beam is degraded to a Gaussian beam, and follows a general diffraction and spreading rule. Consequently, a signal-to-noise ratio or efficiency of transmission is reduced.

## SUMMARY

Embodiments of this application provide a signal transmitting method and apparatus, to improve a signal-to-noise ratio or efficiency of transmission of a carrier signal in a long-range transmission process.

According to a first aspect, a signal transmitting method is provided. The method is applied to a transmitting apparatus. The transmitting apparatus includes a plurality of transmitting units and a plurality of phase modulation units, the plurality of phase modulation units include a first phase modulation unit, and the plurality of transmitting units include a first transmitting unit. The method includes: Each of the plurality of phase modulation units modulates a phase of each carrier signal in a set of carrier signals, the set of carrier signals includes a plurality of carrier signals, frequencies of the plurality of carrier signals are different, the set of carrier signals includes a first carrier signal, and a phase of a first carrier signal obtained through modulation by the first phase modulation unit is determined based on a frequency of the first carrier signal and a location of the first transmitting unit; and each of the plurality of transmitting units transmits a set of carrier signals obtained through modulation by one phase modulation unit, and the first transmitting unit transmits a set of carrier signals obtained through modulation by the first phase modulation unit.

Based on the foregoing solution, a superimposed signal of the carrier signals transmitted by the plurality of transmitting units may form a non-diffractive beam, so that a signal-to-noise ratio or efficiency of transmission of the carrier signal can be improved in a long-range transmission process.

With reference to the first aspect, in some implementations of the first aspect, the phase of the first carrier signal obtained through modulation by the first phase modulation unit is determined according to the following formula:

$$\varphi_i = \frac{2\pi d}{c}\sqrt{f^2 - \frac{(f-f_0)^2}{\tan^2\theta}}$$

$\varphi_i$ is the phase of the modulated first carrier signal, $d$ is a distance between the first transmitting unit and a reference location, a spatial phase of the reference location is 0, c represents a speed of light, $\theta=\arctan(\frac{0.5B}{f_c})$, B represents a bandwidth, $f_c$ represents a center frequency, $f$ represents the frequency of the first carrier signal, and $f_0=f_c(1-\tan^2\theta)$.

Based on the foregoing solution, a phase of each carrier signal transmitted by each transmitting unit may be calculated according to the foregoing formula, so that the superimposed signal of the carrier signals transmitted by the

**EP 4 648 366 A1**

plurality of transmitting units form the non-diffractive beam.

With reference to the first aspect, in some implementations of the first aspect, the phase of the first carrier signal obtained through modulation by the first phase modulation unit is determined according to the following formula:

$$\varphi_i = \frac{2\pi d}{c}\sqrt{f^2 - \frac{(f-f_0)^2}{\tan^2\theta}} \pm \frac{2\pi d_z(f-f_0)}{c*\tan\theta}$$

$\varphi_i$ is the phase of the modulated first carrier signal, $d$ is a distance between the first transmitting unit and a reference location, a spatial phase of the reference location is 0, c represents a speed of light, $\theta = \arctan(\frac{0.5B}{f_c})$ , B represents a bandwidth, $f_c$ represents a center frequency, $f$ represents the frequency of the first carrier signal, $f_0 = f_c(1 - \tan^2\theta)$, and $d_z$ represents a distance between a projection of the first transmitting unit onto a reference plane and the first transmitting unit.

Based on the foregoing solution, the reference plane can be selected when the plurality of transmitting units are not in one plane, and the phase of each carrier signal can be modulated based on the reference plane and according to the foregoing formula, so that the superimposed signal of the carrier signals transmitted by the plurality of transmitting units form the non-diffractive beam.

With reference to the first aspect, in some implementations of the first aspect, the phase of the first carrier signal obtained through modulation by the first phase modulation unit is determined according to the following formula:

$$\varphi_i = \frac{2\pi d}{c}\sqrt{f^2 - \left[\frac{(f-f_0)}{\tan\theta} + \sum_{j=1}^{m} a_j f^{j+1}\right]^2}$$

$\varphi_i$ is the phase of the modulated first carrier signal, d is a distance between the first transmitting unit and a reference location, a spatial phase of the reference location is 0, c represents a speed of light, $\theta = \arctan(\frac{0.5B}{f_c})$ , B represents a bandwidth, $f_c$ represents a center frequency, $f$ represents the frequency of the first carrier signal, $f_0 = f_c(1 - \tan^2\theta)$, m is greater than or equal to 1, and $a_j$ is any value.

Based on the foregoing solution, a dispersion situation is considered, and the phase of each modulated carrier signal may be determined with reference to the foregoing formula, so that the superimposed signal of the carrier signals transmitted by the plurality of transmitting units basically maintains a property of non-diffraction, to improve a signal-to-noise ratio or efficiency of transmission of the carrier signal.

With reference to the first aspect, in some implementations of the first aspect, the phase of the first carrier signal obtained through modulation by the first phase modulation unit is further determined based on a refractive index of a propagation medium of the first carrier signal in a transmission process.

Based on the foregoing solution, if the carrier signal is transmitted in a medium other than vacuum or air, the phase of each modulated carrier signal may be further determined based on the refractive index of the propagation medium, so that the superimposed signal of the carrier signals transmitted by the plurality of transmitting units may form the non-diffractive beam.

With reference to the first aspect, in some implementations of the first aspect, the transmitting apparatus further includes a plurality of amplifying units, the plurality of amplifying units include a first amplifying unit, each of the plurality of amplifying units amplifies power of a carrier signal in the set of carrier signals obtained through modulation by the one phase modulation unit, and inputs a set of power-amplified carrier signals to one transmitting unit, and the first amplifying unit amplifies power of a carrier signal in the set of carrier signals obtained through modulation by the first phase modulation unit, and inputs a set of power-amplified carrier signals to the first transmitting unit.

Based on the foregoing solution, the transmitting apparatus may include a plurality of amplifying units, and each amplifying unit may amplify power of the carrier signal obtained through modulation by one phase modulation unit. In this way, power amplification efficiency is high.

With reference to the first aspect, in some implementations of the first aspect, the transmitting apparatus further includes a frequency mixing unit and an amplifying unit. The amplifying unit amplifies power of a carrier signal generated by a signal source. The frequency mixing unit performs frequency mixing on a carrier signal in a set of carrier signals obtained through modulation by each phase modulation unit and a power-amplified carrier signal, and inputs a set of carrier signals

3

obtained through frequency mixing to one transmitting unit.

Based on the foregoing solution, only one amplifying unit may be disposed in the transmitting apparatus, and a quantity of components of the transmitting apparatus is reduced, to reduce costs.

With reference to the first aspect, in some implementations of the first aspect, the transmitting apparatus further includes a power division unit, the power division unit performs power division on the carrier signal in the set of carrier signals to obtain a plurality of groups of carrier signals, and one group of carrier signals is input to one phase modulation unit.

Based on the foregoing solution, a quantity of components may be reduced to some extent (for example, the transmitting apparatus may not include the frequency mixing unit), and each amplifying unit may amplify power of the carrier signal obtained through modulation by one phase modulation unit. In this way, costs and amplification efficiency can be balanced.

According to a second aspect, a transmitting apparatus is provided. The transmitting apparatus includes a plurality of transmitting units and a plurality of phase modulation units, the plurality of phase modulation units include a first phase modulation unit, and the plurality of transmitting units include a first transmitting unit. Each of the plurality of phase modulation units modulates a phase of each carrier signal in a set of carrier signals, the set of carrier signals includes a plurality of carrier signals, frequencies of the plurality of carrier signals are different, the set of carrier signals includes a first carrier signal, and a phase of a first carrier signal obtained through modulation by the first phase modulation unit is determined based on a frequency of the first carrier signal and a location of the first transmitting unit; and each of the plurality of transmitting units transmits a set of carrier signals obtained through modulation by one phase modulation unit, and the first transmitting unit transmits a set of carrier signals obtained through modulation by the first phase modulation unit.

With reference to the second aspect, in some implementations of the second aspect, the phase of the first carrier signal obtained through modulation by the first phase modulation unit is determined according to the following formula:

$$\varphi_i = \frac{2\pi d}{c}\sqrt{f^2 - \frac{(f-f_0)^2}{\tan^2\theta}}$$

$\varphi_i$ is the phase of the modulated first carrier signal, $d$ is a distance between the first transmitting unit and a reference location, a spatial phase of the reference location is 0, c represents a speed of light, $\theta = \arctan(\frac{0.5B}{f_c})$, B represents a bandwidth, $f_c$ represents a center frequency, $f$ represents the frequency of the first carrier signal, and $f_0 = f_c(1 - \tan^2\theta)$.

With reference to the second aspect, in some implementations of the second aspect, the phase of the first carrier signal obtained through modulation by the first phase modulation unit is determined according to the following formula:

$$\varphi_i = \frac{2\pi d}{c}\sqrt{f^2 - \frac{(f-f_0)^2}{\tan^2\theta}} \pm \frac{2\pi d_z(f-f_0)}{c * \tan\theta}$$

$\varphi_i$ is the phase of the modulated first carrier signal, $d$ is a distance between the first transmitting unit and a reference location, a spatial phase of the reference location is 0, c represents a speed of light, $\theta = \arctan(\frac{0.5B}{f_c})$, B represents a bandwidth, $f_c$ represents a center frequency, $f$ represents the frequency of the first carrier signal, $f_0 = f_c(1 - \tan^2\theta)$, and $d_z$ represents a distance between a projection of the first transmitting unit onto a reference plane and the first transmitting unit.

With reference to the second aspect, in some implementations of the second aspect, the phase of the first carrier signal obtained through modulation by the first phase modulation unit is determined according to the following formula:

$$\varphi_i = \frac{2\pi d}{c}\sqrt{f^2 - \left[\frac{(f-f_0)}{\tan\theta} + \sum_{j=1}^{m} a_j f^{j+1}\right]^2}$$

$\varphi_i$ is the phase of the modulated first carrier signal, $d$ is a distance between the first transmitting unit and a reference location, a spatial phase of the reference location is 0, c represents a speed of light, $\theta = \arctan(\dfrac{0.5B}{f_c})$, B represents a bandwidth, $f_c$ represents a center frequency, $f$ represents the frequency of the first carrier signal, $f_0 = f_c(1-\tan^2\theta)$, m is greater than or equal to 1, and $a_j$ is any value.

With reference to the second aspect, in some implementations of the second aspect, the phase of the first carrier signal obtained through modulation by the first phase modulation unit is further determined based on a refractive index of a propagation medium of the first carrier signal in a transmission process.

With reference to the second aspect, in some implementations of the second aspect, the transmitting apparatus further includes a plurality of amplifying units, the plurality of amplifying units include a first amplifying unit, each of the plurality of amplifying units amplifies power of a carrier signal in the set of carrier signals obtained through modulation by the one phase modulation unit, and inputs a set of power-amplified carrier signals to one transmitting unit, and the first amplifying unit amplifies power of a carrier signal in the set of carrier signals obtained through modulation by the first phase modulation unit, and inputs a set of power-amplified carrier signals to the first transmitting unit.

With reference to the second aspect, in some implementations of the second aspect, the transmitting apparatus further includes a frequency mixing unit and an amplifying unit. The amplifying unit is configured to amplify power of a carrier signal generated by a signal source. The frequency mixing unit is configured to perform frequency mixing on a carrier signal in a set of carrier signals obtained through modulation by each phase modulation unit and a power-amplified carrier signal, and input a set of carrier signals obtained through frequency mixing to one transmitting unit.

With reference to the second aspect, in some implementations of the second aspect, the transmitting apparatus further includes a power division unit, the power division unit is configured to perform power division on the carrier signal in the set of carrier signals to obtain a plurality of groups of carrier signals, and one group of carrier signals is input to one phase modulation unit.

According to a third aspect, a transmitting apparatus is provided. The transmitting apparatus includes a signal source, and the signal source generates a plurality of carrier signals, and the transmitting apparatus is the transmitting apparatus according to the second aspect or any one of the implementations of the second aspect.

According to a fourth aspect, a communication device is provided. The communication device includes a transmitting apparatus, a signal source, a memory, and a processor. The signal source generates a plurality of carrier signals. The processor is configured to execute instructions stored in the memory. The transmitting apparatus is the transmitting apparatus according to the second aspect or any one of the implementations of the second aspect.

According to a fifth aspect, a communication system is provided. The communication system includes a transmitting apparatus and a receiving apparatus, and the transmitting apparatus is the transmitting apparatus according to the second aspect or any one of the implementations of the second aspect.

**BRIEF DESCRIPTION OF DRAWINGS**

FIG. 1 is a diagram of a system applicable to an embodiment of this application;
FIG. 2 is a diagram of coordinates of spatiotemporal coupling according to an embodiment of this application;
FIG. 3 is a schematic flowchart of a signal transmitting method according to an embodiment of this application;
FIG. 4 to FIG. 6 are diagrams of architectures of a transmitting apparatus according to an embodiment of this application; and
FIG. 7 is a diagram of a structure of a transmitting apparatus according to an embodiment of this application.

**DESCRIPTION OF EMBODIMENTS**

The following describes technical solutions of embodiments in this application with reference to accompanying drawings.

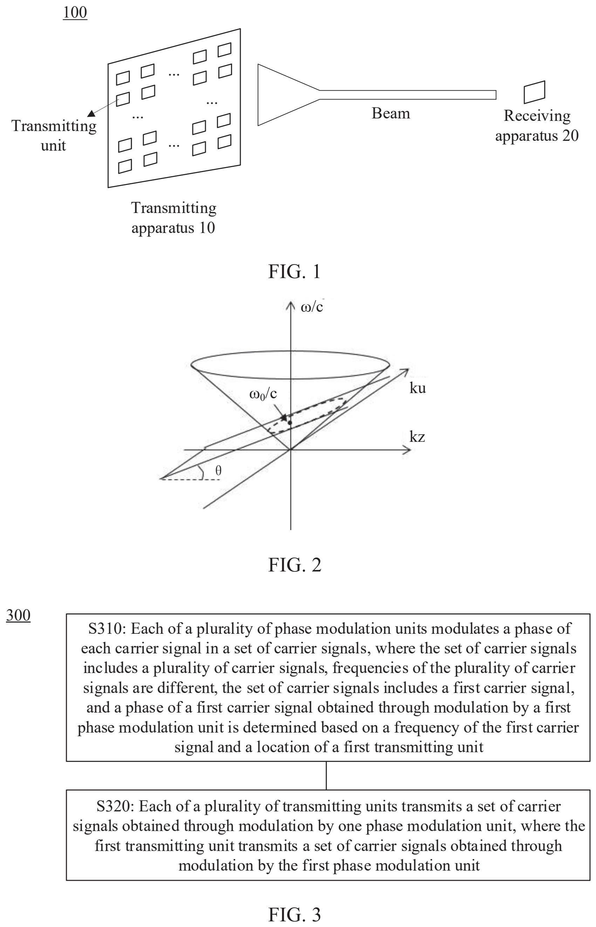

FIG. 1 is a diagram of a system applicable to an embodiment of this application.

The system 100 shown in FIG. 1 includes a transmitting apparatus 10 and a receiving apparatus 20. The transmitting apparatus 10 includes one or more transmitting units, and the transmitting unit includes an antenna. The transmitting apparatus transmits an electromagnetic wave, the electromagnetic wave may form a beam, and a receiver may receive the electromagnetic wave, that is, receive the beam.

It may be understood that the transmitting apparatus 10 and the receiving apparatus 20 may be deployed on different devices, or may be deployed on a same device. This is not limited in this application. For example, in a vehicle-mounted millimeter wave radar, the transmitting apparatus 10 and the receiving apparatus 20 are deployed on a same device, and a beam transmitted by the transmitting apparatus is received by the receiving apparatus after being reflected, so that a detection function can be implemented.

For example, the transmitting apparatus 10 may be deployed on a terminal device or a network device, and the receiving apparatus 20 may be deployed on a terminal device or a network device.

The terminal device may be a wireless terminal device that can receive scheduling and indication information of the network device. The terminal device may be a device that provides a user with voice and/or data connectivity, a handheld device having a wireless connection function, or another processing device connected to a wireless modem.

The terminal device in embodiments of this application includes but is not limited to: a mobile phone (mobile phone), a tablet computer (pad), a computer with a wireless transceiver function, a train, an airplane, a mobile internet device (mobile internet device, MID), a virtual reality (virtual reality, VR) terminal, an augmented reality (augmented reality, AR) terminal, a wireless terminal (for example, a robot) in industrial control (industrial control), a wireless terminal (for example, a vehicle-mounted device, an entire vehicle device, a vehicle-mounted module, a vehicle, or the like) in the internet of vehicles, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal in a 5G network, a terminal in a future evolution network, and the like. In addition, the terminal device may further be used in self driving (self driving), telemedicine (telemedical), smart grid (smart grid), transportation safety (transportation safety), smart city (smart city), smart home (smart home), and another scenario. It may be understood that, all or some functions of the terminal device in this application may alternatively be implemented by using a software function running on hardware, or may be implemented by using a virtualization function instantiated on a platform (for example, a cloud platform).

The network device may be a device in a wireless network. For example, the network device may be a device that is deployed in a radio access network and that provides a wireless communication function for the terminal device. For example, the network device may be a radio access network (radio access network, RAN) node that connects the terminal device to the wireless network.

The network device includes but is not limited to: various types of base stations, such as a next-generation NodeB (gNodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB, or home NodeB, HNB), or may be a server, a wearable device, a vehicle-mounted device, a wireless relay node, a wireless backhaul node, a transmission point (transmission point, TP), a transmission and reception point (transmission and reception point, TRP), or the like, or may be one or a group of (including a plurality of antenna panels) antenna panels of the base station, or may be a network node that forms the base station, for example, a baseband unit (BBU) or a distributed unit (distributed unit, DU). The base station may be a macro base station, a micro base station, a picocell base station, a small cell, a relay station, a balloon station, or the like. It may be understood that all or some functions of the network device in this application may alternatively be implemented by using a software function running on hardware, or may be implemented by using a virtualization function instantiated on a platform (for example, a cloud platform).

The technical solutions in embodiments of this application may be applied to various communication systems, for example, wireless communication (Wi-Fi), wireless charging, wireless backhaul, a long term evolution (Long Term Evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, satellite communication, space communication, a 5th generation (5th generation, 5G) mobile communication system, or a new radio access technology (new radio access technology, NR), or a future communication system, for example, a next-generation communication technology 6G.

A non-diffractive beam such as a Bessel beam only modulates an electromagnetic wave in terms of a spatial phase, and consequently an effective distance of non-diffraction is short. In view of this, modulating an electromagnetic wave in two dimensions that are time and space is considered, to determine whether a long effective distance of non-diffraction can be implemented.

Features of the electromagnetic wave may be described in terms of time and/or space, and the electromagnetic wave is independent in terms of space and time. A property of an electromagnetic wave in terms of time may be referred to as a "frequency", and the "frequency" is a quantity of oscillations of the electromagnetic wave per second, and is represented by f. An angular frequency $\omega=2\pi f$. A property of an electromagnetic wave in terms of space is referred to as a "wave vector". The wave vector is a vector, a direction is a direction of propagation of the electromagnetic wave, and a value is a quantity of periods included in each meter of propagation of the electromagnetic wave, and may be referred to as a "wave number".

The wave vector in terms of space includes three dimensional components. It is assumed that a z direction is a direction in which the electromagnetic wave is transmitted, and any two of x, y, and z directions are perpendicular to each other. Generally, due to diffraction and spreading, the electromagnetic wave also propagates in the x and y directions, and therefore can also be described by a wave vector. Wave numbers in the x, y, and z directions are respectively $k_x$, $k_y$, and $k_z$. In this case, $k_x$, $k_y$, and $k_z$ satisfy formula (1):

$$k_x^2 + k_y^2 + k_z^2 = \frac{\omega^2}{c^2} \quad (1)$$

It is assumed that $k_u$ is a transverse wave number. In other words, $k_u^2 = k_x^2 + k_y^2$. In this case, formula (1) may be transformed into formula (2):

$$k_u^2 + k_z^2 = \frac{\omega^2}{c^2} \quad (2)$$

Points satisfying formula (2) are all located on a cone image in three-dimensional coordinates $k_u$, $k_z$ and $\omega/c$. The cone image is shown in FIG. 2. Therefore, formula (1) is also referred to as a "light cone equation", and the transverse wave number is a wave number in a direction perpendicular to the transmitting direction Z.

Coupling between time and space (spatiotemporal coupling for short) is introduced to obtain formula (3):

$$\frac{\omega}{c} = k_z \tan\theta + \frac{\omega_0}{c} \quad (3)$$

Formula (3) represents a plane, and may be referred to as a "tangent plane equation". $\dfrac{\omega_0}{c}$ represents an intersection point of the tangent plane and a longitudinal axis $\omega/c$, $\theta$ represents an included angle between the tangent plane and a direction of $k_z$, c is a speed of light, $c = \dfrac{1}{\sqrt{\varepsilon_0\mu_0}}$, $\varepsilon_0$ represents a dielectric constant of free space, and $\mu_0$ represents a magnetic permeability of free space.

It may be understood that points that satisfy both formula (1) and formula (3) form a set of spatiotemporal coupling. An electric field, varying with time, of the electromagnetic wave at any point satisfies formula (4):

$$E(x,y,z,t) = \iiint \tilde{E}(k_x,k_y,\omega)e^{ik_x x}e^{ik_y y}e^{ik_z z}e^{-i\omega t}dk_x dk_y d\omega \quad (4)$$

A spectrum distribution function $\tilde{E}(k_x,k_y,\omega)$ is adjusted and controlled to obtain formula (5):

$$\tilde{E}(k_x,k_y,\omega) = \tilde{E}(k_x,k_y)\delta[\omega - \omega(k_x,k_y)] \quad (5)$$

Formula (5) is substituted into formula (4) to obtain formula (6):

$$E(x,y,z,t) = \iint \tilde{E}(k_x,k_y)e^{ik_x x}e^{ik_y y}e^{ik_z z}e^{-i\omega t}dk_x dk_y \quad (6)$$

It is assumed that $b = -\dfrac{\omega_0}{c * \tan\theta}$ and $v_g = c^*\tan\theta$. In this case, formula (3) may be transformed into $k_z = b + \dfrac{\omega}{v_g}$ and then substituted into formula (6) to obtain formula (7):

$$E(x,y,z,t) = \iint \tilde{E}(k_x,k_y)e^{ik_xx}e^{ik_yy}e^{iz(b+\frac{\omega}{v_g})}e^{-i\omega t}dk_xdk_y$$

$$= \iint \tilde{E}(k_x,k_y)e^{ik_xx}e^{ik_yy}e^{-i\omega(t-\frac{z}{v_g})}e^{ibz}dk_xdk_y$$

$$= e^{ibz}\iint \tilde{E}(k_x,k_y)e^{ik_xx}e^{ik_yy}e^{-i\omega(t-\frac{z}{v_g})}dk_xdk_y \quad (7)$$

According to formula (6), it can be deduced that an electric field, varying with time, of the electromagnetic wave at z=0 satisfies formula (8):

$$E(x,y,0,t) = \iint \tilde{E}(k_x,k_y)e^{ik_xx}e^{ik_yy}e^{-i\omega t}dk_xdk_y \quad (8)$$

According to formula (7) and formula (8), it may be learned that $E(x,y,z,t) = e^{ibz} * E(x,y,0,t-\frac{z}{v_g})$ .

Therefore, $\left|E(x,y,z,t)\right| = \left|E(x,y,0,t-\frac{z}{v_g})\right|$ .

"| |" represents a modulus. It can be seen that the electromagnetic wave introduced with spatiotemporal coupling has envelope invariance, that is, has a property of non-diffraction.

The foregoing proves a property of non-diffraction of the electromagnetic wave in which spatiotemporal coupling is introduced. The following starts to describe a signal transmitting method provided in embodiments of this application. It may be understood that, according to the signal transmitting method provided in this embodiment of this application, a non-diffractive beam or a beam close to a non-diffractive beam may be generated, and the beam close to the non-diffractive beam may basically maintain a property of non-diffraction, so that a signal-to-noise ratio or efficiency of transmission of a signal can be improved in a long-range transmission process.

FIG. 3 is a schematic flowchart of a signal transmitting method according to an embodiment of this application. The method 300 shown in FIG. 3 may be applied to a transmitting apparatus. The transmitting apparatus includes a plurality of phase modulation units and a plurality of transmitting units. The plurality of phase modulation units include a first phase modulation unit, and the plurality of transmitting units include a first transmitting unit. The method 300 includes the following steps.

S310: Each of the plurality of phase modulation units modulates a phase of each carrier signal in a set of carrier signals, where the set of carrier signals includes a plurality of carrier signals, frequencies of the plurality of carrier signals are different, the set of carrier signals includes a first carrier signal, and a phase of a first carrier signal obtained through modulation by the first phase modulation unit is determined based on a frequency of the first carrier signal and a location of the first transmitting unit.

For example, the plurality of carrier signals included in the set of carrier signals may be a plurality of carrier signals generated by a signal source, or may be a plurality of digital signals generated by the phase modulation unit. This is not limited in this embodiment of this application.

S320: Each of the plurality of transmitting units transmits a set of carrier signals obtained through modulation by one phase modulation unit, where the first transmitting unit transmits a set of carrier signals obtained through modulation by the first phase modulation unit.

For example, the phase modulation unit may be disposed in a baseband module or a phase shifter, and a plurality of carrier signals obtained through modulation by each phase modulating unit may be sent through an antenna corresponding to one transmitting unit.

In a possible implementation, the phase of the first carrier signal obtained through modulation by the first phase modulation unit is determined according to the following formula:

$$\varphi_i = \frac{2\pi d}{c}\sqrt{f^2 - \frac{(f-f_0)^2}{\tan^2\theta}} \quad (9)$$

$\varphi_i$ is the phase of the modulated first carrier signal, d is a distance between the first transmitting unit and a reference location, a spatial phase of the reference location is 0, c represents a speed of light, $\theta = \arctan(\dfrac{0.5B}{f_c})$, B represents a bandwidth, $f_c$ represents a center frequency, $f$ represents the frequency of the first carrier signal, and $f_0 = f_c(1 - \tan 2\theta)$.

For example, the transmitting apparatus includes a plurality of transmitting units, for example, includes a transmitting unit #1, a transmitting unit #2, a transmitting unit #3, and a transmitting unit #4. Each transmitting unit transmits a plurality of carrier signals obtained through modulation by one phase modulation unit. A plurality of carrier signals transmitted by the transmitting unit #1 include a carrier signal #1, a carrier signal #2, and a carrier signal #3, and a phase of the carrier signal #1 is determined based on a frequency of the carrier signal #1 and a location of the transmitting unit #1. For example, the frequency of the first carrier signal in formula (9) is replaced with the frequency of the carrier signal #1, and the distance between the first transmitting unit and the reference location is replaced with a distance between the transmitting unit #1 and the reference location. Then, the phase of the carrier signal #1 may be calculated according to formula (9). Phases of the carrier signal #2, the carrier signal #3, and carrier signals obtained through modulation by another phase modulation unit are calculated by analogy.

Specifically, a formula for the phase of the carrier signal #1 may be derived based on formula (1), formula (3), and

$$k_u^2 = k_x^2 + k_y^2 \ .$$

For example, $k_u = \dfrac{2\pi}{c}\sqrt{f^2 - \dfrac{(f - f_0)^2}{\tan^2 \theta}}$ may be obtained based on formula (1), formula (3), and

$k_u^2 = k_x^2 + k_y^2$ . In other words, if a transverse wave number of an electromagnetic wave satisfies the formula, a property of non-diffraction can be implemented. In this process, the reference location may be set, and the spatial phase of the reference location is 0. In other words, a phase of a carrier signal transmitted at the reference location is 0. The distance between the transmitting unit #1 and the reference location is d, and the frequency of the carrier signal #1 is f1. In this case, the phase of the carrier signal #1 is $\varphi_1$ :

$$\varphi_1 = k_u d = \dfrac{2\pi d}{c}\sqrt{f1^2 - \dfrac{(f1 - f_0)^2}{\tan^2 \theta}}$$

It may be understood that a phase of a modulated carrier signal is a function of a distance and a frequency. Therefore, if a phase of each carrier signal is modulated with reference to formula (9), association, namely, spatiotemporal coupling, between a frequency and a wave vector can be implemented. In an actual scenario, there are an infinite quantity of carrier signals (frequencies) and spatial locations. Therefore, only phases of a limited quantity of carrier signals can be modulated in a specific implementation process.

For example, the transmitting apparatus includes the plurality of transmitting units, and the plurality of transmitting units are on one plane. The parameter $\theta$ may be determined based on the available bandwidth B. In other words, $B = 2f_c \tan\theta$. Therefore, it may be determined that $\theta = \arctan(0.5B/f_c)$, and a frequency range is $[f_c(1 - \tan\theta), f_c(1 + \tan\theta)]$. In other words, in formula (9), the parameter $f_0 = f_c(1 - \tan 2\theta)$. A frequency to be modulated may be selected within the frequency range. For example, frequencies are selected starting from a lowest frequency at an interval of $\Delta f$, or frequencies may be selected at an unequal interval. This is not limited in this application. In addition, a reference location may be selected, and the reference location may be a central location of a transmitting antenna. This is not limited in this application. Each phase modulation unit adjusts a phase of each carrier signal in the set of carrier signals.

In a possible implementation, the phase of the first carrier signal obtained through modulation by the first phase modulation unit is determined according to the following formula:

$$\varphi_i = \dfrac{2\pi d}{c}\sqrt{f^2 - \dfrac{(f - f_0)^2}{\tan^2 \theta}} \pm \dfrac{2\pi d_z (f - f_0)}{c * \tan\theta} \quad (10)$$

$d_z$ represents a distance between a projection of the first transmitting unit onto a reference plane and the first transmitting unit. For meanings represented by other parameters, refer to related descriptions of formula (9). Details are not described herein again.

It may be understood that, if a direction from the first transmitting unit to the reference plane is the same as a propagation direction of the plurality of carrier signals transmitted by the first transmitting unit, "±" in formula (10) is set to

"-"; or if a direction from the first transmitting unit to the reference plane is opposite to a propagation direction of the plurality of carrier signals transmitted by the first transmitting unit, "$\pm$" in formula (10) is set to "+".

For example, in some cases, it cannot be ensured that the transmitting units are on one plane. In this case, phase compensation in a z direction needs to be performed. The plurality of transmitting units are located on a curved surface or on a plurality of planes. In this case, a reference plane may be determined, and a projection of each transmitting unit onto the reference plane is a corresponding projection unit. Selection of a reference location is the same as that described above, and the reference location is also projected onto the reference plane. A phase of each carrier signal transmitted by each transmitting unit may be calculated according to formula (9), and then a corresponding compensation phase is calculated.

For example, the compensation phase $\varphi_1' = k_z d_{z1} = \dfrac{2\pi d_{z1}(f1 - f_0)}{c * \tan\theta}$ of the carrier signal #1 may be calculated according to the formulas $k_u = \dfrac{2\pi}{c}\sqrt{f^2 - \dfrac{(f - f_0)^2}{\tan^2\theta}}$ and $k_u^2 + k_z^2 = \dfrac{\omega^2}{c^2}$. Therefore, the phase $\varphi_1$ of the

carrier signal #1 is:

$$\varphi_1 = \frac{2\pi d}{c}\sqrt{f1^2 - \frac{(f1 - f_0)^2}{\tan^2\theta}} \pm \varphi_1' = \frac{2\pi d}{c}\sqrt{f1^2 - \frac{(f1 - f_0)^2}{\tan^2\theta}} \pm \frac{2\pi d_{z1}(f1 - f_0)}{c * \tan\theta}$$

$d_{z1}$ is a distance between the projection unit of the transmitting unit #1 onto the reference plane and an actual location of the transmitting unit #1. A phase of another carrier signal transmitted by the transmitting unit #1 and a phase of a carrier signal transmitted by another transmitting unit can be deduced by referring to the calculation formula for the phase $\varphi_1$ of the carrier signal #1. Details are not listed one by one herein.

It may be understood that, if a direction from the transmitting unit #1 to the reference plane is the same as a propagation direction of the plurality of carrier signals transmitted by the transmitting unit #1, "$\pm$" in the foregoing formula for the phase $\varphi_1$ is set to "-"; or if a direction from the transmitting unit #1 to the reference plane is opposite to a propagation direction of the plurality of carrier signals transmitted by the transmitting unit #1, "$\pm$" in the foregoing formula for the phase $\varphi_1$ is set to "+".

In a possible implementation, the phase of the first carrier signal obtained through modulation by the first phase modulation unit is determined according to the following formula:

$$\varphi_i = \frac{2\pi d}{c}\sqrt{f^2 - \left[\frac{(f - f_0)}{\tan\theta} + \sum_{j=1}^{m} a_j f^{j+1}\right]^2} \quad (11)$$

m is greater than or equal to 1, and $a_j$ is any value. For meanings represented by other parameters, refer to related descriptions of formula (9). Details are not described herein again.

For example, in some application scenarios, dispersion needs to be introduced to achieve a specific purpose. For example, in a radar detection application scenario, an excessively small focusing spot of a non-diffractive beam increases a detection time. For another example, in an energy transmission application scenario, an excessively small focusing spot causes an excessively high energy density, and may consequently cause a decrease in efficiency of a receiving rectifier circuit, because rectification efficiency usually reaches a maximum value at a specific input power, or the excessively high power density may damage the receiving device. In the foregoing cases, a size of the focusing spot needs to be expanded. This may be implemented by introducing dispersion and controlling a dispersion size.

Specifically, a coupling manner of time and space is fine-tuned. In other words, formula (3) may be replaced with:

$$\frac{\omega}{c} + \sum_{j=1}^{m} a_j * tan\theta * \omega^{j+1} = k_z \tan\theta + \frac{\omega_0}{c} \quad (12)$$

Formula (12) includes a high-order frequency component, and represents a curved surface tangent plane, and the curved surface tangent plane is usually approximately a plane. A parameter $a_j$ is set to approximately represent any function f($\omega$), and formula (12) may be transformed into:

$$k_z = \frac{\omega}{c * \tan\theta} + \sum_{j=1}^{m} a_j \omega^{j+1} - \frac{\omega_0}{c * \tan\theta} \quad (13)$$

Formula (13) is substituted into formula (6). Similarly, it is assumed that $b = -\dfrac{\omega_0}{c * \tan\theta}$ , and $v_g = c*\tan\theta$, and the following is obtained:

$$\mathrm{E}(x,y,z,t) = e^{ibz} \iint \tilde{E}(k_x, k_y) e^{ik_x x} e^{ik_y y} e^{-i\omega(t - \frac{z}{v_g} - \sum_{j=1}^{m} a_j \omega^j)} dk_x dk_y$$

The parameter $a_j$ is adjusted. In other words, $a_j$ is set to a series of smaller numbers, and the following may be obtained:

$$E(x,y,z,t) \approx e^{ibz} \iint \tilde{E}(k_x, k_y) e^{ik_x x} e^{ik_y y} e^{-i\omega(t - \frac{z}{v_g})} dk_x dk_y$$

Therefore, $\left| E(x,y,z,t) \right| \approx \left| E(x,y,0,t - \dfrac{z}{v_g}) \right|$ .

In this case, the signal can still basically maintain a property of non-diffraction, but spread to a specific degree. A spreading degree depends on a value of the parameter $a_j$. A smaller $a_j$ indicates smaller spreading, and a larger $a_j$ indicates larger spreading. In this case, the phase $\varphi_1$ of the carrier signal #1 is:

$$\varphi_1 = \frac{2\pi d}{c} \sqrt{f1^2 - \left[ \frac{(f1 - f_0)}{\tan\theta} + \sum_{j=1}^{m} a_j f1^{j+1} \right]^2}$$

In this example, a phase of another carrier signal transmitted by the transmitting unit #1 and a phase of a carrier signal transmitted by another transmitting unit can be deduced by referring to the calculation formula for the phase $\varphi_1$ of the carrier signal #1. Details are not listed one by one herein.

In a possible implementation, the phase of the first carrier signal is further determined based on a refractive index of a propagation medium of the first carrier signal in a transmission process.

For example, formula (9), formula (10), and formula (11) are obtained based on propagation of an electromagnetic wave in a vacuum or air. If the electromagnetic wave is used in a medium, for example, for underwater communication, a refractive index n of a communication medium needs to be considered. Formula (1) may be transformed into formula (14) when an influence of the refractive index of the communication medium is considered:

$$k_x^2 + k_y^2 + k_z^2 = n^2 \frac{\omega^2}{c^2} \quad (14)$$

A transverse wave number after the influence of the refractive index is considered may be derived based on a derivation method of formula (9), and a formula for calculating the transverse wave number $k_u$ is as follows:

$$k_u = \frac{2\pi}{c} \sqrt{n^2 f^2 - \frac{(f - f_0)^2}{\tan^2\theta}} \quad (15)$$

Therefore, the phase, of the modulated first carrier signal, obtained by combining formula (9) with the refractive index of the medium is as follows:

$$\varphi_1 = \frac{2\pi d}{c} \sqrt{n^2 f^2 - \frac{(f - f_0)^2}{\tan^2\theta}} \quad (16)$$

The phase, of the modulated first carrier signal, obtained by combining formula (10) with the refractive index of the medium is as follows:

$$\varphi_i = \frac{2\pi d}{c} \sqrt{n^2 f^2 - \frac{(f-f_0)^2}{\tan^2 \theta}} \pm \frac{2\pi n d_z (f-f_0)}{c * \tan\theta} \quad (17)$$

It may be understood that, if the direction from the first transmitting unit to the reference plane is the same as the propagation direction of the plurality of carrier signals transmitted by the first transmitting unit, "$\pm$" in formula (17) is set to "-"; or if the direction from the first transmitting unit to the reference plane is opposite to the propagation direction of the plurality of carrier signals transmitted by the first transmitting unit, "$\pm$" in formula (17) is set to "+".

The phase, of the modulated first carrier signal, obtained by combining formula (11) with the refractive index of the medium is as follows:

$$\varphi_i = \frac{2\pi d}{c} \sqrt{n^2 f^2 - \left[\frac{(f-f_0)}{\tan\theta} + \sum_{j=1}^{m} a_j f^{j+1}\right]^2} \quad (18)$$

It may also be understood that signals of a plurality of frequencies are superimposed to form the signal transmitted by each transmitting unit. Selection of the frequency is as described above. For example, N frequencies are selected. In other words, N carrier signals are selected, and a phase of each carrier signal is modulated. A phase of a modulated carrier signal may be determined with reference to formula (9), (10), (11), (16), (17), or (18).

For example, an $i^{th}$ carrier signal transmitted by the transmitting unit #1 is $A * e^{j(2\pi fit + \varphi i1)}$, i is greater than 1, and $\varphi_{i1}$ is a phase of the $i^{th}$ carrier signal transmitted by the transmitting unit #1, and may be calculated based on formula (9), (10), (11), (16), (17), or (18). Therefore, the signal transmitted by the transmitting unit #1 is a superimposed signal:

$$\sum_{i=1}^{M} A * e^{j(2\pi f_i t + \varphi_{i1})} \quad (19)$$

A is a signal amplitude. It may be understood that a superimposed signal transmitted by another transmitting unit may be deduced according to formula (19). Details are not listed one by one herein.

The following separately describes a phase modulation process and a transmitting process of the carrier signal by using a specific architecture of the transmitting apparatus.

Implementation #1: The transmitting apparatus further includes a plurality of amplifying units, the plurality of amplifying units include a first amplifying unit, each of the plurality of amplifying units amplifies power of a carrier signal in the set of carrier signals obtained through modulation by the one phase modulation unit, and inputs a set of power-amplified carrier signals to one transmitting unit, and the first amplifying unit amplifies power of a carrier signal in the set of carrier signals obtained through modulation by the first phase modulation unit, and inputs a set of power-amplified carrier signals to the first transmitting unit.

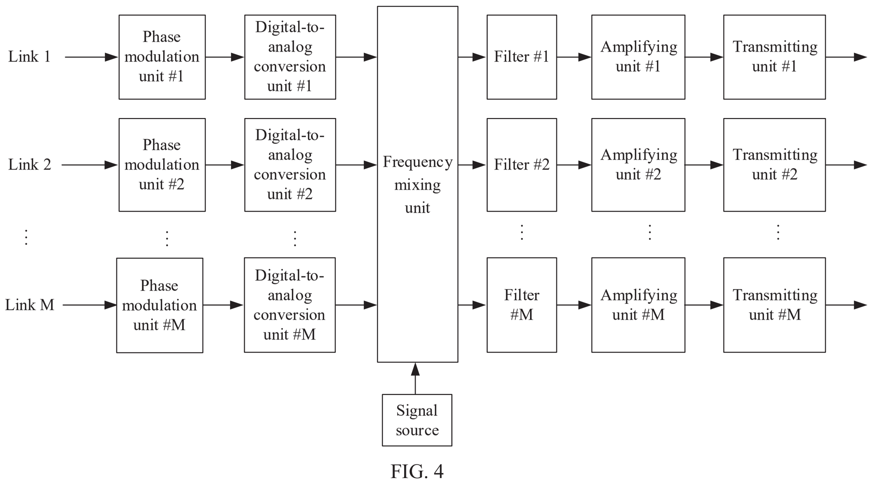

For example, the plurality of carrier signals in a set of carrier signals obtained through modulation by each phase modulation unit are a plurality of digital signals generated by each phase modulation unit. As shown in FIG. 4, an architecture of the transmitting apparatus includes a signal source, M phase modulation units, M digital-to-analog conversion units, one or M frequency mixing units, M filters, M amplifying units, and M transmitting units, where M is greater than 1. In other words, the transmitting apparatus includes M transmitting links, and each transmitting link includes one phase modulation unit, one digital-to-analog conversion unit, one frequency mixing unit, one filter, one amplifying unit, and one transmitting unit. Low-frequency digital implementation may be first performed in each phase modulation unit to generate the plurality of carrier signals. In other words, formula (19) is transformed into formula (20):

$$\sum_{i=1}^{M} A * e^{j[2\pi(f_i - f_c)t + \varphi_{ip}]} \quad (20)$$

A first transmitting link is used as an example for description. A phase modulation unit #1 corresponding to the transmitting unit #1 selects N1 sampling points according to formula (20) through time sampling. For example, t=0, T, 2T..., or (N1-1)T is substituted into formula (20) to obtain a plurality of digital signals. Frequencies of the plurality of digital signals are different, and N1 is greater than or equal to 2. The phase modulation unit #1 inputs the plurality of digital signals to a digital-to-analog conversion unit #1, and the digital-to-analog conversion unit #1 performs digital-to-analog conversion on the plurality of digital signals to generate a plurality of analog signals. Then, the plurality of analog signals and carrier signals generated by the signal source enter the frequency mixing unit for frequency mixing. After frequency mixing, a plurality of carrier signals are obtained and input to an amplifying unit #1. The amplifying unit #1 amplifies power of the plurality of carrier signals and then feeds the plurality of power-amplified carrier signals to the transmitting unit #1 for transmitting.

For a method in which a phase modulation unit corresponding to another transmitting unit, for example, a transmitting unit #2 ..., or a transmitting unit #M, obtains a plurality of digital signals, refer to the method in which the phase modulation unit #1 obtains the plurality of digital signals according to formula (20). For processing of a signal by each component in another transmit link, refer to related descriptions of the first transmitting link. Details are not described herein again.

It may be understood that, the architecture of the transmitting apparatus shown in FIG. 4 may include one frequency mixing unit. In this case, the frequency mixing unit may be of a structure with a plurality of inputs and a plurality of outputs (for example, M inputs and M outputs), and each input port and an output port corresponding to the input port correspond to one transmitting link. Alternatively, the transmitting apparatus architecture shown in FIG. 4 may include M frequency mixing units, and each frequency mixing unit corresponds to one transmitting link.

It may be further understood that the architecture of the transmitting apparatus shown in FIG. 4 is merely an example. The architecture of the transmitting apparatus may further include some components shown in FIG. 4, or the architecture of the transmitting apparatus may further include components other than those shown in FIG. 4. This is not limited in this application.

In the implementation #1, each transmitting link has a corresponding amplifying unit to amplify power of the plurality of carrier signals. In this way, efficiency of power amplification is high.

Implementation #2: The transmitting apparatus further includes a frequency mixing unit and an amplifying unit. The amplifying unit amplifies power of a carrier signal generated by a signal source. The frequency mixing unit performs frequency mixing on a carrier signal in a set of carrier signals obtained through modulation by each phase modulation unit and a power-amplified carrier signal, and inputs a set of carrier signals obtained through frequency mixing to one transmitting unit.

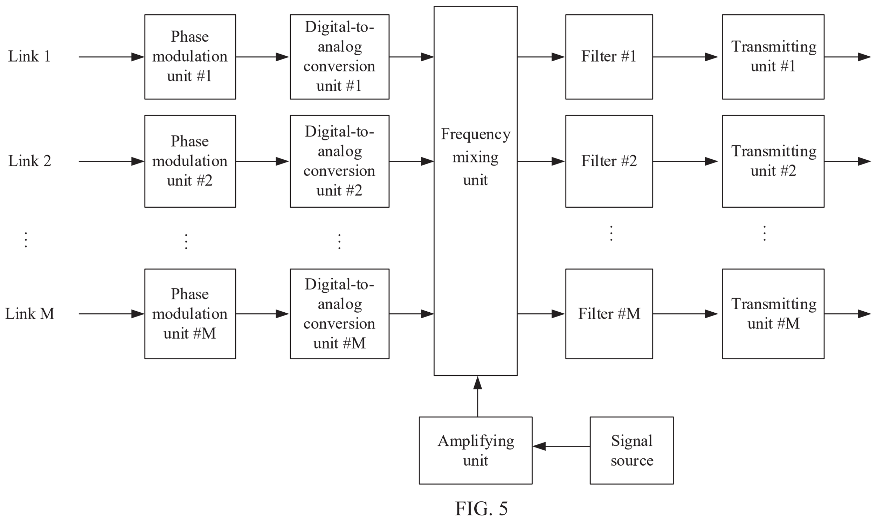

For example, the plurality of carrier signals in the set of carrier signals obtained through modulation by each phase modulation unit are a plurality of digital signals generated by each phase modulation unit. As shown in FIG. 5, an architecture of the transmitting apparatus includes a signal source, M phase modulation units, M digital-to-analog conversion units, one or M frequency mixing units, M filters, an amplifying unit, and M transmitting units, where M is greater than 1. In other words, the transmitting apparatus includes M transmitting links, and each transmitting link includes one phase modulation unit, one digital-to-analog conversion unit, one frequency mixing unit, one filter, one amplifying unit, and one transmitting unit. Low-frequency digital implementation may be first performed in each phase modulation unit to generate the plurality of carrier signals. In other words, formula (19) is transformed into formula (20).

A first transmitting link is used as an example for description. A phase modulation unit #1 corresponding to the transmitting unit #1 selects N1 sampling points according to formula (20) through time sampling. For example, t=0, T, 2T ..., or (N1-1)T is substituted into formula (20) to obtain a plurality of digital signals. Frequencies of the plurality of digital signals are different, and N1 is greater than or equal to 2. The phase modulation unit #1 inputs the plurality of digital signals to a digital-to-analog conversion unit #1, and the digital-to-analog conversion unit #1 performs digital-to-analog conversion on the plurality of digital signals to generate a plurality of analog signals. Then, the plurality of analog signals and the power-amplified carrier signal generated by the signal source enter the frequency mixing unit for frequency mixing. After frequency mixing, a plurality of carrier signals are obtained and input to a filter #1 for filtering. The plurality of carrier signals after filtering are fed to the transmitting unit #1 for transmitting.

For a method in which a phase modulation unit corresponding to another transmitting unit, for example, a transmitting unit #2 ..., or a transmitting unit #M, obtains a plurality of digital signals, refer to the method in which the phase modulation unit #1 obtains the plurality of digital signals according to formula (20). For processing of a signal by each component in another transmit link, refer to related descriptions of the first transmitting link. Details are not described herein again.

It may be understood that, the architecture of the transmitting apparatus shown in FIG. 5 may include one frequency mixing unit. In this case, the frequency mixing unit may be of a structure with a plurality of inputs and a plurality of outputs (for example, M inputs and M outputs), and each input port and an output port corresponding to the input port correspond to one transmitting link. Alternatively, the transmitting apparatus architecture shown in FIG. 5 may include M frequency mixing units, and each frequency mixing unit corresponds to one transmitting link.

It may be further understood that the architecture of the transmitting apparatus shown in FIG. 5 is merely an example. The architecture of the transmitting apparatus may further include some components shown in FIG. 5, or the architecture of the transmitting apparatus may further include components other than those shown in FIG. 5. This is not limited in this application.

To reduce a quantity of components and reduce wiring difficulty, the architecture of the transmitting apparatus may include one amplifying unit. In other words, frequency mixing is directly performed on the analog signal and the power-amplified carrier signal (generated by the signal source). In this implementation, the power-amplified carrier signal needs to be distributed to each transmitting link through power division. In the implementation #2, a quantity of components may be reduced, so that costs are low.

Implementation #3: The transmitting apparatus further includes: a power division unit, the power division unit performs power division on the carrier signal in the set of carrier signals to obtain a plurality of groups of carrier signals, one group of carrier signals is input to one phase modulation unit, and each phase modulation unit performs phase modulation in S310.

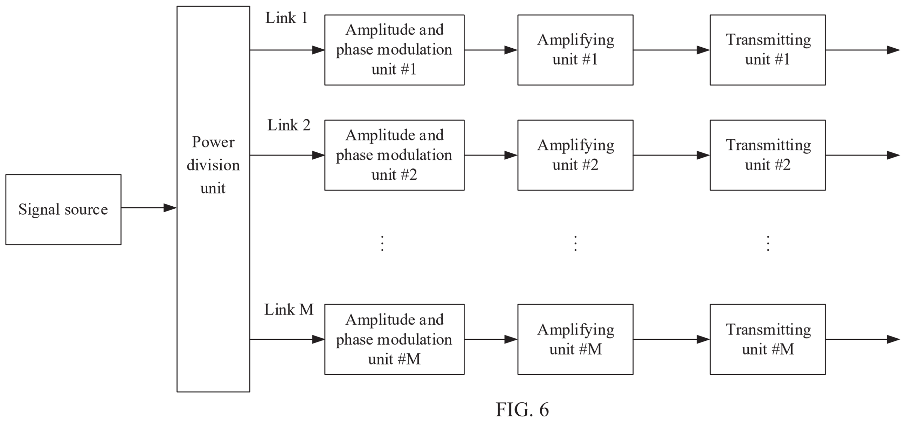

For example, the plurality of carrier signals in the set of carrier signals obtained through modulation by each phase modulation unit are generated by the signal source. As shown in FIG. 6, an architecture of the transmitting apparatus includes a signal source, a power division unit, M amplitude and phase modulation units (including M amplitude modulation units and M phase modulation units), M amplifying units, and M transmitting units. The power division unit performs power division on a carrier signal generated by the signal source to obtain M same groups of carrier signals, each group of carrier signals includes a plurality of carrier signals, and frequencies of the plurality of carrier signals in each group are different. Each group of carrier signals is processed through one transmitting link.

One transmitting link is used as an example. A phase modulation unit #1 in an amplitude and phase modulation unit #1 compensates for a phase difference of one group of carrier signals. It is assumed that a phase of one carrier signal $(a*e^{j\beta})$ in the group of carrier signals is $\beta$, and the phase modulation unit #1 needs to modulate the phase of the carrier signal to $\psi$. In this case, the phase modulation unit #1 increases the phase of the carrier signal by $(\psi-\beta)$, and $\psi$ may be determined according to formula (9), (10), (11), (16), (17) or (18). An amplitude modulation unit #1 in the amplitude and phase modulation unit #1 compensates for the amplitude difference. It is assumed that an amplitude of one carrier signal $(a*e^{j\beta})$ in one group of carrier signals is a, and the amplitude modulation unit #1 needs to modulate the amplitude of the carrier signal to b. In this case, the amplitude modulation unit #1 multiplies the amplitude of the carrier signal by b/a times, to obtain a required carrier signal $b*e^{j\psi}$. Another amplitude and phase modulation unit modulates phases and amplitudes of another group of carrier signals by analogy. Details are not described herein again.

It may be understood that the architecture of the transmitting apparatus shown in FIG. 6 is merely an example. The architecture of the transmitting apparatus may further include some components shown in FIG. 6, or the architecture of the transmitting apparatus may further include components other than those shown in FIG. 6. This is not limited in this application.

In the implementation #3, a quantity of components may be reduced to some extent (for example, the transmitting apparatus does not include the frequency mixing unit), and each amplifying unit may amplify power of a carrier signal obtained through modulation by one phase modulation unit. In this way, in the architecture of the transmitting apparatus shown in FIG. 6, costs and power amplification efficiency can both be taken into consideration.

The foregoing describes a method for transmitting a carrier signal and various implementations.

It may be understood that the solutions in embodiments of this application may be properly combined for use, and explanations or descriptions of terms, similar operations, or steps in embodiments may be cross-referenced or explained in embodiments. This is not limited.

It may be further understood that, in the foregoing method embodiments, methods and operations implemented by the transmitting apparatus may alternatively be implemented by components (for example, a chip, a chip system, a processor, or a circuit) of the transmitting apparatus. This is not limited in this application.

It should be understood that the term "and/or" in this application describes only an association relationship between associated objects and represents that three relationships may exist. For example, A and/or B may represent the following three cases: Both A and B exist, only A exists, and only B exists, where A and B may be singular or plural. In addition, the character "/" in this specification usually indicates an "or" relationship between the associated objects, but may also indicate an "and/or" relationship. For details, refer to the context for understanding.

The foregoing describes the method embodiments in embodiments of this application with reference to the accompanying drawings FIG. 3 to FIG. 6, and the following describes apparatus embodiments in embodiments of this application. It may be understood that the descriptions of the method embodiments and the descriptions of the apparatus embodiments may correspond to each other. Therefore, for a part that is not described, refer to the foregoing method embodiments.

The foregoing is mainly performed by the transmitting apparatus. To implement the foregoing functions, the transmitting apparatus includes a corresponding hardware structure and/or software module for performing each function. A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, a transmitting apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

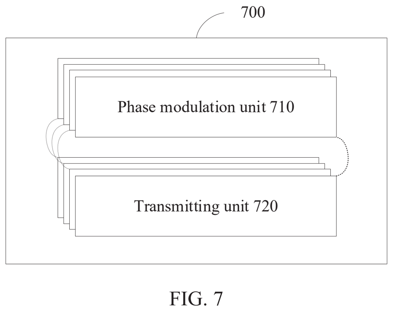

FIG. 7 is a diagram of a structure of a transmitting apparatus 700 according to an embodiment of this application. The apparatus 700 includes a plurality of transmitting units and a plurality of phase modulation units. Each transmitting unit corresponds to one phase modulation unit, the plurality of transmitting units include a transmitting unit 720, the plurality of phase modulation units include a phase modulation unit 710, and the transmitting unit 720 corresponds to the phase modulation unit 710.

In a design, the apparatus 700 may be the transmitting apparatus in the foregoing embodiments of the method 300. The apparatus 700 may implement the steps or procedures performed by the transmitting apparatus in the foregoing method embodiments.

In a possible implementation, each of the plurality of phase modulation units modulates a phase of each carrier signal in a set of carrier signals, the set of carrier signals includes a plurality of carrier signals, frequencies of the plurality of carrier signals are different, the set of carrier signals includes a first carrier signal, and a phase of a first carrier signal obtained through modulation by the phase modulation unit 710 is determined based on a frequency of the first carrier signal and a location of the transmitting unit 720. Each of the plurality of transmitting units transmits a set of carrier signals obtained through modulation by one phase modulation unit, and the transmitting unit 720 transmits a set of carrier signals obtained through modulation by the phase modulation unit 710.

In a possible implementation, the phase of the first carrier signal obtained through modulation by the phase modulation unit 710 is determined according to the following formula:

$$\varphi_i = \frac{2\pi d}{c}\sqrt{f^2 - \frac{(f-f_0)^2}{\tan^2\theta}}$$

$\varphi_i$ is the phase of the modulated first carrier signal, $d$ is a distance between the transmitting unit 720 and a reference location, a spatial phase of the reference location is 0, c represents a speed of light, $\theta = \arctan(\dfrac{0.5B}{f_c})$ , B represents a bandwidth, $f_c$ represents a center frequency, $f$ represents the frequency of the first carrier signal, and $f_0 = f_c(1 - \tan^2\theta)$.

In a possible implementation, the phase of the first carrier signal obtained through modulation by the phase modulation unit 710 is determined according to the following formula:

$$\varphi_i = \frac{2\pi d}{c}\sqrt{f^2 - \frac{(f-f_0)^2}{\tan^2\theta}} \pm \frac{2\pi d_z(f-f_0)}{c*\tan\theta}$$

$\varphi_i$ is the phase of the modulated first carrier signal, $d$ is a distance between the transmitting unit 720 and a reference location, a spatial phase of the reference location is 0, c represents a speed of light, $\theta = \arctan(\dfrac{0.5B}{f_c})$ , B represents a bandwidth, $f_c$ represents a center frequency, $f$ represents the frequency of the first carrier signal, $f_0 = f_c(1 - \tan^2\theta)$, and $d_z$ represents a distance between a projection of the transmitting unit 720 onto the reference plane and the transmitting unit 720.

In a possible implementation, the phase of the first carrier signal obtained through modulation by the phase modulation unit 710 is determined according to the following formula:

$$\varphi_i = \frac{2\pi d}{c}\sqrt{f^2 - \left[\frac{(f-f_0)}{\tan\theta} + \sum_{j=1}^{m} a_j f^{j+1}\right]^2}$$

$\varphi_i$ is the phase of the first carrier signal, $d$ is a distance between the transmitting unit 720 and the reference location, a spatial phase of the reference location is 0, c represents a speed of light, $\theta = \arctan\left(\dfrac{0.5B}{f_c}\right)$, B represents a bandwidth, $f_c$ represents a center frequency, $f$ represents the frequency of the first carrier signal, $f_0 = f_c(1-\tan^2\theta)$, m is greater than or equal to 1, and $a_j$ is any value.

In a possible implementation, the phase of the first carrier signal obtained through modulation by the phase modulation unit 710 is further determined based on a refractive index of a propagation medium of the first carrier signal in a transmission process.

In a possible implementation, the transmitting apparatus 700 further includes a plurality of amplifying units, the plurality of amplifying units include a first amplifying unit, each of the plurality of amplifying units amplifies power of a carrier signal in the set of carrier signals obtained through modulation by the one phase modulation unit, and inputs a set of power-amplified carrier signals to one transmitting unit, and the first amplifying unit amplifies power of a carrier signal in the set of carrier signals obtained through modulation by the phase modulation unit 710, and inputs a set of power-amplified carrier signals to the transmitting unit 720.

In a possible implementation, the transmitting apparatus 700 further includes a frequency mixing unit and an amplifying unit. The amplifying unit is configured to amplify power of a carrier signal generated by a signal source. The frequency mixing unit is configured to perform frequency mixing on a carrier signal in a set of carrier signals obtained through modulation by each phase modulation unit and a power-amplified carrier signal, and input a set of carrier signals obtained through frequency mixing to one transmitting unit.

In a possible implementation, the transmitting apparatus 700 further includes a power division unit, the power division unit is configured to perform power division on the carrier signal in the set of carrier signals to obtain a plurality of groups of carrier signals, and one group of carrier signals is input to one phase modulation unit.

Optionally, the transmitting apparatus 700 further includes a signal source, and the signal source generates a plurality of carrier signals.

An embodiment of this application further provides a communication device. The communication device includes the transmitting apparatus 700, a signal source, a memory, and a processor. The signal source generates a plurality of carrier signals, and the processor is configured to execute instructions stored in the memory.

The communication device may be a network device, a terminal device, or a detection apparatus, for example, a radar device, in which the transmitting apparatus in embodiments of this application is disposed, and the transmitting apparatus described in the foregoing embodiments is disposed on a radar, to increase a signal transmission distance; or the communication device may be a network device, for example, a base station, in which the transmitting apparatus in embodiments of this application is disposed, and the transmitting apparatus described in the foregoing embodiments is disposed on the base station, to improve signal strength and coverage of the base station.

An embodiment of this application further provides a communication system. The communication system includes a transmitting apparatus and a receiving apparatus. The transmitting apparatus is, for example, the transmitting apparatus 700. It may be understood that the transmitting apparatus and the receiving apparatus may be deployed on one communication device (for example, a radar device), or the transmitting apparatus and the receiving apparatus may be deployed on different communication devices (for example, a terminal device or a network device). This is not limited in this application.

Embodiments described in this application may be independent solutions, or may be combined based on internal logic. All these solutions fall within the protection scope of this application.

A person of ordinary skill in the art may be aware that, in combination with the examples described in embodiments disclosed in this specification, units and modules may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It should be understood that, in embodiments of this application, sequence numbers of the foregoing processes do not mean execution sequences of the modules. The execution sequences of the processes should be determined based on functions and internal logic of the processes, and should not constitute any limitation on implementation processes of embodiments of this application.

In embodiments provided in this application, it should be understood that the disclosed transmitting apparatus may be implemented in another manner. For example, the described embodiments of the transmitting apparatus are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the transmitting apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps in the methods described in embodiments of this application. The storage medium includes any medium that can store program code, such as a USB flash drive, a removable hard disk drive, a read-only memory (ROM, Read-Only Memory), a random access memory (RAM, Random Access Memory), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal transmitting method, applied to a transmitting apparatus, wherein the transmitting apparatus comprises a plurality of transmitting units and a plurality of phase modulation units, the plurality of phase modulation units comprise a first phase modulation unit, the plurality of transmitting units comprise a first transmitting unit, and the method comprises:

   modulating, by each of the plurality of phase modulation units, a phase of each carrier signal in a set of carrier signals, wherein the set of carrier signals comprises a plurality of carrier signals, frequencies of the plurality of carrier signals are different, the set of carrier signals comprises a first carrier signal, and a phase of a first carrier signal obtained through modulation by the first phase modulation unit is determined based on a frequency of the first carrier signal and a location of the first transmitting unit; and

   transmitting, by each of the plurality of transmitting units, a set of carrier signals obtained through modulation by one phase modulation unit, wherein the first transmitting unit transmits a set of carrier signals obtained through modulation by the first phase modulation unit.

2. The method according to claim 1, wherein the phase of the first carrier signal obtained through modulation by the first phase modulation unit is determined according to the following formula:

$$\varphi_i = \frac{2\pi d}{c} \sqrt{f^2 - \frac{(f-f_0)^2}{\tan^2 \theta}} \; ,$$

   wherein
   $\varphi_i$ is the phase of the modulated first carrier signal, $d$ is a distance between the first transmitting unit and a reference location, a spatial phase of the reference location is 0, c represents a speed of light, $\theta = \arctan(\frac{0.5B}{f_c})$, B represents a bandwidth, $f_c$ represents a center frequency, $f$ represents the frequency of the first carrier signal, and $f_0 = f_c(1 - \tan^2\theta)$.

3. The method according to claim 1, wherein the phase of the first carrier signal obtained through modulation by the first phase modulation unit is determined according to the following formula:

$$\varphi_{\mathrm{i}} = \frac{2\pi d}{c}\sqrt{f^2 - \frac{(f-f_0)^2}{\tan^2\theta}} \pm \frac{2\pi d_z(f-f_0)}{c*\tan\theta} \, ,$$

wherein
$\varphi_{\mathrm{i}}$ is the phase of the modulated first carrier signal, $d$ is a distance between the first transmitting unit and a reference location, a spatial phase of the reference location is 0, c represents a speed of light, $\theta = \arctan(\dfrac{0.5B}{f_c})$, B represents a bandwidth, $f_c$ represents a center frequency, $f$ represents the frequency of the first carrier signal, $f_0 = f_c(1 - \tan^2\theta)$, and $d_z$ represents a distance between a projection of the first transmitting unit onto a reference plane and the first transmitting unit.

4. The method according to claim 1, wherein the phase of the first carrier signal obtained through modulation by the first phase modulation unit is determined according to the following formula:

$$\varphi_{\mathrm{i}} = \frac{2\pi d}{c}\sqrt{f^2 - \left[\frac{(f-f_0)}{\tan\theta} + \sum_{j=1}^{m} a_j f^{j+1}\right]^2} \, ,$$

wherein
$\varphi_{\mathrm{i}}$ is the phase of the modulated first carrier signal, $d$ is a distance between the first transmitting unit and a reference location, a spatial phase of the reference location is 0, c represents a speed of light, $\theta = \arctan(\dfrac{0.5B}{f_c})$, B represents a bandwidth, $f_c$ represents a center frequency, $f$ represents the frequency of the first carrier signal, $f_0 = f_c(1 - \tan^2\theta)$, m is greater than or equal to 1, and $a_j$ is any value.

5. The method according to any one of claims 1 to 4, wherein the phase of the first carrier signal obtained through modulation by the first phase modulation unit is further determined based on a refractive index of a propagation medium of the first carrier signal in a transmission process.

6. The method according to any one of claims 1 to 5, wherein the transmitting apparatus further comprises a plurality of amplifying units, the plurality of amplifying units comprise a first amplifying unit, each of the plurality of amplifying units amplifies power of a carrier signal in the set of carrier signals obtained through modulation by the one phase modulation unit, and inputs a set of power-amplified carrier signals to one transmitting unit, and the first amplifying unit amplifies power of a carrier signal in the set of carrier signals obtained through modulation by the first phase modulation unit, and inputs a set of power-amplified carrier signals to the first transmitting unit.

7. The method according to any one of claims 1 to 5, wherein the transmitting apparatus further comprises a frequency mixing unit and an amplifying unit;

the amplifying unit amplifies power of a carrier signal generated by a signal source; and
the frequency mixing unit performs frequency mixing on a carrier signal in a set of carrier signals obtained through modulation by each phase modulation unit and a power-amplified carrier signal, and inputs the set of carrier signals obtained through frequency mixing to one transmitting unit.

8. The method according to any one of claims 1 to 5, wherein the transmitting apparatus further comprises a power division unit; and
the power division unit performs power division on the carrier signal in the set of carrier signals to obtain a plurality of groups of carrier signals, and one group of carrier signals is input to one phase modulation unit.

9. A transmitting apparatus, comprising a plurality of transmitting units and a plurality of phase modulation units, wherein the plurality of phase modulation units comprise a first phase modulation unit, and the plurality of transmitting units comprise a first transmitting unit;

each of the plurality of phase modulation units modulates a phase of each carrier signal in a set of carrier signals, the set of carrier signals comprises a plurality of carrier signals, frequencies of the plurality of carrier signals are different, the set of carrier signals comprises a first carrier signal, and a phase of a first carrier signal obtained through modulation by the first phase modulation unit is determined based on a frequency of the first carrier signal and a location of the first transmitting unit; and

each of the plurality of transmitting units transmits a set of carrier signals obtained through modulation by one phase modulation unit, and a first transmitting unit transmits the set of carrier signals obtained through modulation by the first phase modulation unit.

10. The apparatus according to claim 9, wherein the phase of the first carrier signal obtained through modulation by the first phase modulation unit is determined according to the following formula:

$$\varphi_i = \frac{2\pi d}{c}\sqrt{f^2 - \frac{(f-f_0)^2}{\tan^2\theta}},$$

wherein

$\varphi_i$ is the phase of the modulated first carrier signal, $d$ is a distance between the first transmitting unit and a reference location, a spatial phase of the reference location is 0, c represents a speed of light, $\theta = \arctan(\frac{0.5B}{f_c})$, B represents a bandwidth, $f_c$ represents a center frequency, $f$ represents the frequency of the first carrier signal, and $f_0 = f_c(1-\tan^2\theta)$.

11. The apparatus according to claim 9, wherein the phase of the first carrier signal obtained through modulation by the first phase modulation unit is determined according to the following formula:

$$\varphi_i = \frac{2\pi d}{c}\sqrt{f^2 - \frac{(f-f_0)^2}{\tan^2\theta}} \pm \frac{2\pi d_z(f-f_0)}{c*\tan\theta},$$

wherein

$\varphi_i$ is the phase of the modulated first carrier signal, $d$ is a distance between the first transmitting unit and a reference location, a spatial phase of the reference location is 0, c represents a speed of light, $\theta = \arctan(\frac{0.5B}{f_c})$, B represents a bandwidth, $f_c$ represents a center frequency, $f$ represents the frequency of the first carrier signal, $f_0 = f_c(1-\tan^2\theta)$, and $d_z$ represents a distance between a projection of the first transmitting unit onto a reference plane and the first transmitting unit.

12. The apparatus according to claim 9, wherein the phase of the first carrier signal obtained through modulation by the first phase modulation unit is determined according to the following formula:

$$\varphi_i = \frac{2\pi d}{c}\sqrt{f^2 - \left[\frac{(f-f_0)}{\tan\theta} + \sum_{j=1}^{m} a_j f^{j+1}\right]^2},$$

wherein

$\varphi_i$ is the phase of the modulated first carrier signal, $d$ is a distance between the first transmitting unit and a reference location, a spatial phase of the reference location is 0, c represents a speed of light, $\theta = \arctan(\frac{0.5B}{f_c})$, B represents a bandwidth, $f_c$ represents a center frequency, $f$ represents the frequency of the first carrier signal, $f_0 = f_c(1-\tan^2\theta)$, m is greater than or equal to 1, and $a_j$ is any value.

13. The apparatus according to any one of claims 9 to 12, wherein the phase of the first carrier signal obtained through modulation by the first phase modulation unit is further determined based on a refractive index of a propagation medium of the first carrier signal in a transmission process.

14. The apparatus according to any one of claims 9 to 13, wherein the transmitting apparatus further comprises a plurality of amplifying units, the plurality of amplifying units comprise a first amplifying unit, each of the plurality of amplifying units amplifies power of a carrier signal in the set of carrier signals obtained through modulation by the one phase modulation unit, and inputs a set of power-amplified carrier signals to one transmitting unit, and the first amplifying unit amplifies power of a carrier signal in the set of carrier signals obtained through modulation by the first phase modulation unit, and inputs a set of power-amplified carrier signals to the first transmitting unit.

15. The apparatus according to any one of claims 9 to 13, wherein the transmitting apparatus further comprises a frequency mixing unit and an amplifying unit;

the amplifying unit is configured to amplify power of a carrier signal generated by a signal source; and
the frequency mixing unit is configured to perform frequency mixing on a carrier signal in the set of carrier signals obtained through modulation by each phase modulation unit and the power-amplified carrier signal, and input the set of carrier signals obtained through frequency mixing to one transmitting unit.

16. The apparatus according to any one of claims 9 to 13, wherein the transmitting apparatus further comprises a power division unit; and
the power division unit is configured to perform power division on the carrier signal in the set of carrier signals to obtain a plurality of groups of carrier signals, and one group of carrier signals is input to one phase modulation unit.

17. A transmitting apparatus, wherein the transmitting apparatus comprises a signal source, the signal source generates a plurality of carrier signals, and the transmitting apparatus is the transmitting apparatus according to any one of claims 9 to 16.

18. A communication device, wherein the communication device comprises a transmitting apparatus, a signal source, a memory, and a processor, the signal source generates a plurality of carrier signals, the processor is configured to execute instructions stored in the memory, and the transmitting apparatus is the transmitting apparatus according to any one of claims 9 to 16.

19. A communication system, wherein the communication system comprises a transmitting apparatus and a receiving apparatus, and the transmitting apparatus is the transmitting apparatus according to any one of claims 9 to 17.

100

FIG. 1

FIG. 2

300

S310: Each of a plurality of phase modulation units modulates a phase of each carrier signal in a set of carrier signals, where the set of carrier signals includes a plurality of carrier signals, frequencies of the plurality of carrier signals are different, the set of carrier signals includes a first carrier signal, and a phase of a first carrier signal obtained through modulation by a first phase modulation unit is determined based on a frequency of the first carrier signal and a location of a first transmitting unit

S320: Each of a plurality of transmitting units transmits a set of carrier signals obtained through modulation by one phase modulation unit, where the first transmitting unit transmits a set of carrier signals obtained through modulation by the first phase modulation unit

FIG. 3

EP 4 648 366 A1

FIG. 4

FIG. 5

FIG. 6

700

Phase modulation unit 710

Transmitting unit 720

FIG. 7

## INTERNATIONAL SEARCH REPORT

| International application No. |
| --- |
| **PCT/CN2023/072663** |

| A. | CLASSIFICATION OF SUBJECT MATTER |
| --- | --- |

H04L27/18(2006.01)i; H04L27/34(2006.01)i

According to International Patent Classification (IPC) or to both national classification and IPC

| B. | FIELDS SEARCHED |
| --- | --- |

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT, CNABS, CNKI, VEN, USTXT, WOTXT, EPTXT, IEEE: 调相, 调制, 多个, 发射, 发送, 功分, 距离, 频率, 位置, 相位, 相位调制, 衍射, 载波, phase modulation, phase, modulation, plurality, emission, transmission, power division, distance, frequency, position, diffraction, carrier wave

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | US 6157681 A (MOTOROLA, INC.) 05 December 2000 (2000-12-05) description, column 3, line 5-column 7, line 19, and figure 2 | 1-19 |
| Y | CN 101741805 A (HUAWEI TECHNOLOGIES CO., LTD.) 16 June 2010 (2010-06-16) description, paragraphs [0028]-[0032] | 1-19 |
| Y | CN 109633736 A (SHANDONG UNIVERSITY OF SCIENCE AND TECHNOLOGY) 16 April 2019 (2019-04-16) description, paragraphs [0005]-[0014] | 1-19 |
| A | CN 107431681 A (HUAWEI TECHNOLOGIES CO., LTD.) 01 December 2017 (2017-12-01) entire document | 1-19 |
| A | CN 108234376 A (SHENZHEN RENERGY TECHNOLOGY CO., LTD.) 29 June 2018 (2018-06-29) entire document | 1-19 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 September 2023** | **22 September 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/072663**

| Patent document cited in search report | | | Publication date (day/month/year) | Patent family member(s) | | | Publication date (day/month/year) |
|---|---|---|---|---|---|---|---|
| US | 6157681 | A | 05 December 2000 | None | | | |
| CN | 101741805 | A | 16 June 2010 | CN | 101741805 | B | 27 March 2013 |
| CN | 109633736 | A | 16 April 2019 | WO | 2020133774 | A1 | 02 July 2020 |
| | | | | CN | 109633736 | B | 25 January 2022 |
| CN | 107431681 | A | 01 December 2017 | WO | 2016149901 | A1 | 29 September 2016 |
| | | | | CN | 107431681 | B | 14 April 2020 |
| CN | 108234376 | A | 29 June 2018 | CN | 108234376 | B | 13 August 2021 |

Form PCT/ISA/210 (patent family annex) (July 2022)